# EUROPEAN PATENT APPLICATION

(11) **EP 1 379 013 A1**
(43) Date of publication of application: **07.01.2004**
(21) Application number: 03101582.9
(22) Date of filing: 30.05.2003
(51) Int. Cl.: H04B 7/185, H04Q 7/38

(54) **Wireless communication system supporting cell handover from a non-terrestrial to a terrestrial cell**

(30) Priority: 26.06.2002 GB 0214694
(71) Applicant: MOTOROLA, INC., Schaumburg, IL 60196 (US)
(72) Inventor: Ben-Ayun, Moshe, 62567 Shoham (IL); Rozental, Mark, 76560 Rehovot (IL); Grossman, Ovadia, 62497 Tel Aviv (IL)
(74) Representative: McCormack, Derek James

(57) **Abstract**

A wireless communication system (300) including a first cellular network operable to serve terrestrial based mobile stations and a second cellular network operable to serve non-terrestrial based mobile stations, each of the first and second networks including serving communication units defining cells and operable to serve mobile stations within the cells with a communications resource, and at least one mobile station (314) capable of communicating with serving communication units of the first network and serving communications of the second network, the system (300) including handover means operable to facilitate handover (280) of communications service of a given mobile station between the first network and the second network, the handover means being operable to produce location information relating to the location of the mobile station and to derive using the location information a resource scanning list (250) of selected cells to be scanned by the mobile station (314) for prospective service handover between the first and second networks. A wireless subscriber unit and method of cell re-selection are also described. In this manner, calls are not dropped when transferring a call from, say, an AGA non-terrestrial cell to a terrestrial cell.

## Description

### Field of the Invention

This invention relates to a method, system and apparatus for mobile communications. In particular, it relates to an interaction between terrestrial and non-terrestrial cellular communication. The invention is applicable to, but not limited to, a mechanism for cell re-selection when traversing between terrestrial and non-terrestrial cellular communication systems.

### Background of the Invention

Wireless communications systems, for example cellular telephony or private mobile radio communications systems, typically provide for radio telecommunication links to be arranged between a plurality of base transceiver stations (BTSs) and a plurality of subscriber units, often termed mobile stations. The term mobile station (MS) generally includes both hand-portable and vehicular mounted radio units. In the context of the present invention, a MS is extended to an aircraft mounted radio unit.

Wireless communications systems are distinguished over fixed communications systems, such as the public switched telephone networks (PSTN), principally in that mobile stations move between service providers (and/or different BTS) and in doing so encounter varying radio propagation environments.

In a wireless communication system, each BTS has associated with it a particular geographical coverage area (or cell). The coverage area defines a particular range that the BTS can maintain acceptable communications with MSs operating within its serving cell. Often these cells combine to produce an expanded system coverage area. Communication between a BTS and a MS is effected over wireless communication channels. Some of these channels are used for carrying traffic whilst other channels (which may be logical or dedicated channels) are used for transferring control information, such as call paging.

One area of wireless communication relates to public and/or private mobile radio (PMR) communications. PMR communications are a standard communication tool of the emergency services, such as the Police, Fire Brigade and Ambulance. One current example of a PMR wireless communication system is the TErrestrial Trunked RAdio (TETRA) communication system defined by industry standards of the European Telecommunication Standards Institute (ETSI).

A current focus of the TETRA standardisation process is to define Air-to-Ground-to-Air (AGA) communications, based on a perceived (Emergency Services) customer need. It is envisaged that a TETRA MS will need to be able to operate in aircraft such as helicopters. Existing cellular communication systems are inappropriate when the MS is non-terrestrial in nature. In particular, the provision of cellular communications to aircraft is inconsistent with terrestrial cellular communications as the antenna pattern of terrestrial systems is designed to broadcast over a fixed pattern close to the ground. However, a non-terrestrial antenna, serving a fast-moving aircraft, is designed to broadcast over a much larger area, in order to avoid the aircraft repeatedly having to hand-over communications to adjacent cells.

When a TETRA MS is to operate in a helicopter it is intended that it will communicate on dedicated Air-Ground-Air (AGA) frequencies, to dedicated air-cell base transceiver stations. The AGA frequencies will not be used for the ground (terrestrial-based) cellular network.

In this manner, it is envisaged that a combined TETRA system will include an overlay of non-terrestrial (air-) cells, of pre-determined geometry and location in space to the existing terrestrial-based cellular network. It is planned that air-borne communication via a dedicated air-cell TETRA BTS will avoid causing severe interference to a terrestrial-based TETRA communication.

In particular, it is also envisaged that the TETRA standard will require that a call should not be dropped whilst, say, a helicopter is landing or taking-off. In this manner, a seamless handover between the terrestrial and AGA networks is required. When the helicopter is on the ground, the TETRA MS in the helicopter must communicate via the terrestrial TETRA network, as the AGA network should not, in general (unless the helicopter has, for example, landed on a mountain), be available.

It is envisaged that TETRA cells for AGA operation will be much larger then TETRA ground cells. This is because of propagation characteristic differences. Path loss for AGA propagation is known to be proportional to 1/(d^2). This is in contrast to known Path loss for terrestrial propagation, which is proportional to 1/(d^3.5); where "d" is distance. In this manner, one air cell coverage area may therefore include, for example, up to approximately one hundred terrestrial TETRA cells in practice.

The inventors of the present invention have recognised a problem in the aforementioned Air-to-Ground-to-Air (AGA) communications. When a helicopter, for example, is taking-off, it is relatively easy for the airborne MS in the helicopter to handover from a terrestrial cell to a serving non-terrestrial cell during a call. The reason for this is the likelihood that there are very few, say one, two or in rare cases three, non-terrestrial cells that are available to provide AGA service above that particular terrestrial-based cell. Hence, cell re-selection and subsequent handover can be effected quickly and seamlessly.

However, when the helicopter is airborne and especially at a high altitude it receives strong or high-level signals from very many terrestrial cells. Therefore, in the reverse case when the helicopter is performing a relatively fast landing, the TETRA MS does not have enough time to select (effectively scan and select) the best terrestrial cell from these very many (say one hundred) cells. Thus, performing cell re-selection and subsequent handover from a single non-terrestrial cell to one of a multitude of terrestrial cells is highly problematic.

Furthermore, the inventors of the present invention have both recognised and appreciated the problem with focusing on the highest-level terrestrial based signal for cell re-selection and handover purposes. As mentioned, the antenna patterns of terrestrial-based systems are configured for use on the ground. Therefore, the likelihood is that these antenna patterns will be configured to have antenna nulls directly above the terrestrial BTS' antenna. In this regard, it is likely that one of the very low-level terrestrial transmissions will be from the most desirable terrestrial BTS for cell re-selection and handover once the helicopter has landed.

Thus, the inventors have recognised that when landing, a TETRA MS in a helicopter must be aware of which terrestrial cell it is landing in. If the TETRA MS does not have this information, it will have to scan all TETRA frequencies. With so many potential terrestrial sites to scan, and handover to, any ongoing call will likely be dropped during the delay caused by the scanning.

Thus, there currently exists a need to provide a communication system; a communication unit and method of cell re-selection wherein the abovementioned disadvantages associated with cell re-selection whilst an aircraft is landing may be alleviated.

### Summary of Invention

In accordance with a first aspect of the present invention, there is provided a wireless communication system including a first cellular network operable to serve terrestrial based mobile stations and a second cellular network operable to serve non-terrestrial based mobile stations, each of the first and second networks including serving communication units defining cells and operable to serve mobile stations within the cells with a communications resource, and at least one mobile station capable of communicating with serving communication units of the first network and serving communications of the second network, the system including handover means operable to facilitate handover of communications service of a given mobile station between the first network and the second network, the handover means being operable to produce location information relating to the location of the mobile station and to derive using the location information a resource scanning list of selected cells to be scanned by the mobile station for prospective service handover between the first and second networks.

The wireless serving communication units may comprise base transceiver stations. In general, the serving units of the first and second networks will be different, e.g. because they may need to operate on different frequencies. However, it is possible for the installations used for some of the units of the two networks to be shared.

The said mobile station may be operable to produce and transmit location information to a wireless serving communication unit of a serving network, and a processing unit of the serving network may be operable to generate the scanning list using the location information and to transmit the same to the mobile station. The processor may be included in the wireless serving communication unit.

Alternatively, the said mobile station may be operable to produce the location information and a processing unit of the mobile station may be operable to generate the scanning list using the location information. In this case a memory of the mobile station may store locations of BTSs of the first network for comparison in the processor with the produced information relating to the location of the mobile station.

In the system according to the first aspect, the location information may be produced when the mobile station is airborne, and said scanning list may include a selected subset of terrestrial serving wireless communication units of the first network suitable for the mobile station to handover to.

According to the present invention in a second aspect there is provided a wireless communication unit which is a mobile station adapted to operate in the wireless communication system according to the first aspect of the invention. The mobile station may be operable in a plurality of ground networks and may be operable when switching from an air cell to a ground cell to switch to the ground cell of an appropriate network.

The wireless communication unit according to the second aspect of the invention may be operable to produce the location information by a known time difference of arrival calculation method using the relative delays in transmissions received from a plurality of wireless serving communication units of the second cellular network. Alternatively, or in addition, the unit may include a GPS (Global Positioning System) receiver and may be operable to produce the location information using an output from the GPS receiver.

The wireless communication unit according to the second aspect may further be operable to initiate handover procedure of communication service from the second network to the first network. This initiation may be triggered by entry of a command signal by the user when a suitable stage of a landing procedure (indicating a suitable height) is observed. Alternatively, a control or trigger signal may be generated when the unit reaches a pre-determined measured altitude, e.g. as measured on an associated altimeter. Alternatively, the procedure may be initiated by the unit when it determines that the signal strength from one or more serving units, e.g. of the second network, has fallen below a predetermined threshold or a rate of change (decrease) of such a strength measurement has risen above a predetermined threshold, as described in Applicant's copending UK Patent Application of even date concerning an invention by the same inventors as for the invention described herein.

The wireless communication unit according to the second aspect may further be operable in executing a handover procedure of communication service from the second network to the first network by use of the scanning list mentioned earlier to carry out the handover procedure of communication service from the second network to the first network by selecting from the list a serving wireless communication unit of the first network. The scanning list may comprise a list of channel frequencies of serving communications units of the first network.

Thus, the wireless communication unit according to the second aspect may be operable to carry out the handover procedure when the unit is carried on an aircraft, e.g. helicopter which is in the process of landing or has landed on the ground from the air.

The wireless communication unit according to the second aspect may be operable to carry out a further handover procedure of communication service between different serving communications units of the first network using information relating to the strength and/or quality of signals received from different serving units. This is similar to handover of mobile stations which operate only in the second network.

The wireless communication unit according to the second aspect may comprise:
a receiver to receive transmissions from a plurality of air-cell wireless serving communication units;
a location detector operable to carry out a determination of the location of the unit using location information derived thereby. The location detector may comprise:
   a signal processing function, operably coupled to said receiver, for determining a transmission delay and thereby a respective distance of the wireless communication unit from a respective plurality of air-cell wireless serving communication units; and
   a transmitter, operably coupled to said signalling processor function, for transmitting said determined delays to an air-cell wireless serving communication unit for determining a scanning list of prospective terrestrial cells for the wireless communication unit to handover to.

According to the present invention in a third aspect there is provided a method of operation in a wireless communication system including a first cellular network operable to serve terrestrial based mobile stations and a second cellular network operable to serve non-terrestrial based mobile stations, each of the first and second networks including serving communication units defining cells and operable to serve mobile stations within the cells with a communications resource, and at least one mobile station capable of communicating with serving communication units of the first network and serving communications of the second units, the method including handing over of communications service of a given mobile station between the first network and the second network by producing location information relating to the location of the mobile station and deriving using the location information a resource scanning list of selected cells to be scanned by the mobile station for prospective service handover between the first and second networks.

In summary, the inventors of the present invention have recognised the problems in cell re-selection and handover between terrestrial and non-terrestrial cells. The problem is particularly pertinent when a mobile station is in an aircraft such as a helicopter and landing at some speed. Network handover and cell selection in the new network may be achieved rapidly by determining a location of the airborne mobile station, preferably using a calculation of delayed transmissions received from other air-cell BTSs and/or by a GPS receiver, and thereafter generating a short scanning list by comparing the determined location information with stored locations of BTSs of the first network. For example, a terrestrial cell frequency-scanning list can be generated, for the mobile station to use when landing the aircraft. In this manner, the aircraft's MS is able rapidly to select the most appropriate cell/wireless serving communication unit (BTS) to handover to, thereby reducing the possibility of current communications being dropped by the handover procedure.

Exemplary embodiments of the present invention will now be described, with reference to the accompanying drawings, in which:

### Brief Description of the Drawings

FIG. 1 illustrates a combined terrestrial and non-terrestrial communication system in accordance with a preferred embodiment of the present invention;
FIG. 2 shows a flowchart of the preferred methodology for implementing the inventive concepts of the present invention; and
FIG. 3 illustrates a block diagram of a trunked radio communication system that can be adapted to support the various inventive concepts of the preferred embodiment of the present invention.

### Description of detailed embodiments of the invention.

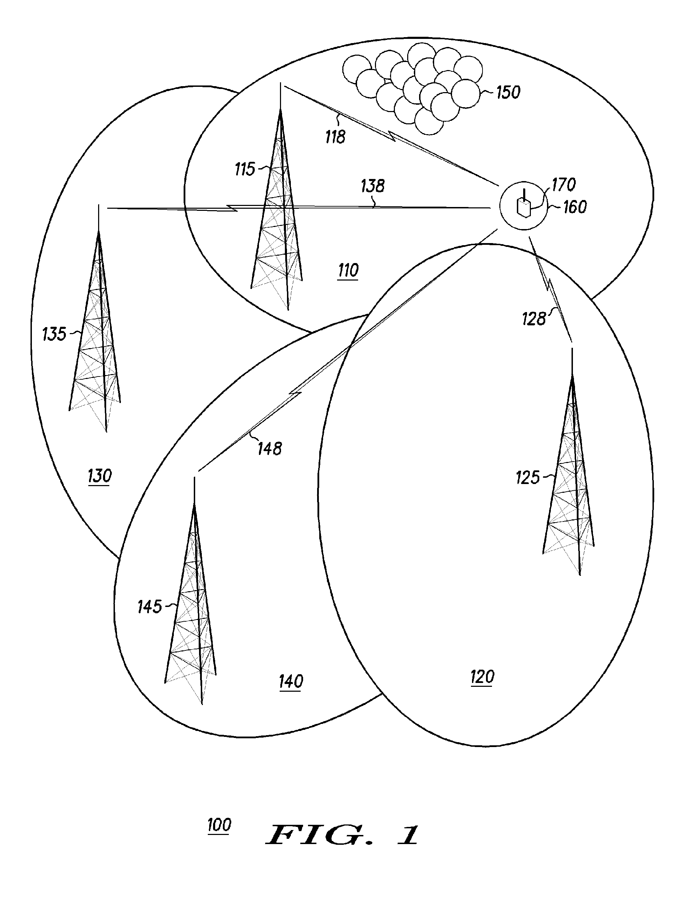

Referring first to FIG. 1, a graphical representation of a combined terrestrial and non-terrestrial TETRA communication system 100 is illustrated, in accordance with a preferred embodiment of the present invention. The combined system includes four non-terrestrial overlapping cells 110, 120, 130, 140, where each non-terrestrial cell, when projected onto the ground, covers the same area as a plurality of smaller terrestrial TETRA cells 150. A limited number of the smaller terrestrial TETRA cells 150 are shown for clarity purposes only.

The non-terrestrial cells 110, 120, 130, 140 are supported by air-cell BTSs 115, 125, 135, and 145 respectively. As shown, an aircraft, containing a TETRA MS 170 is landing in a terrestrial TETRA cell 160, which resides within the larger area corresponding to non-terrestrial TETRA cell 110.

In accordance with an embodiment of the invention, the TETRA MS 170 determines which terrestrial cell it is landing in, to simplify and execute the cell re-selection and subsequent handover processes. The TETRA MS 170, namely a wireless communication unit includes a receiver (not shown) to receive transmissions from a plurality of air-cell wireless serving communication units (BTSs). The wireless communication unit further includes a signalling processing function (not shown), operably coupled to the receiver, for determining a transmission delay and thereby a respective distance of the wireless communication unit from the respective plurality of air-cell wireless BTSs. A transmitter (not shown), operably coupled to the signalling processing function, for transmitting the determined delays to an air-cell wireless BTS for determining a frequency-scanning list of prospective terrestrial cells for the wireless communication unit to handover to.

The aircraft is shown as flying inside non-terrestrial (air) cell 110. Hence, the aircraft's TETRA MS 170 is being served in its AGA communications by air-cell BTS 115. In accordance with the preferred embodiment of the present invention, the TETRA MS 170 monitors signals from its serving air-cell BTS 115, and any adjacent air-cell BTSs, such as air-cell BTSs 125, 135, 145.

These air-cell BTS transmissions provide an absolute timing of the transmitted signal. The TETRA MS 170 then determines an absolute timing of the received signal from the transmissions. The TETRA MS 170 then calculates respective delays τ_{B} 128, τ_{C} 138 and τ_{D} 148 relative to the delay τ_{A} 118 (from the air-cell BTS 115 of its serving AGA cell 110).

The respective delays τ_{B} 128, τ_{C} 138 and τ_{D} 148 relative to the delay τ_{A} 118 are reported to its serving air-cell BTS 115. Air-cell BTS 115 (or another processing and communication unit in the TETRA infrastructure), thereby calculates the geographical location of the respective air-cell BTSs 125, 135, 145.

Thus, based on the reported delays from the MS 170, and the location of these adjacent air-cell BTSs, air-cell BTS 115 (or another communication unit in the TETRA infrastructure) determines a location of the TETRA MS 170. In this regard, the air-cell BTS 115 generates a list of potential or likely terrestrial control channel frequencies for the few terrestrial cells that the aircraft is determined as flying over. The air-cell BTS 115 then transmits this list to the TETRA MS 170, such that, on attempting to land anywhere in that vicinity, at that time, the landing TETRA MS 170 will use this preferred list of terrestrial cells to scan or handover to. In this manner, by use of an air-cell BTS-based airborne MS location mechanism, a fast and smooth handover of ongoing calls can be effected without the call being dropped. Notably, the frequency-scanning list is a subset of the cells/terrestrial BTS that the aircraft can receive communications from whilst airborne.

The aforementioned technique, using absolute timing references contained within the air-cell BTS transmissions, can be readily applied with minor changes required to the current TETRA standard.

Although the preferred embodiment of the present invention utilises these absolute timing references, together with subsequent transmission delay calculations to determine a general location of an aircraft, it is within the contemplation of the invention that other location mechanisms may be used. For example, it is envisaged that the TETRA MS 170 may incorporate a global positioning system (GPS) function. In this scenario, the TETRA MS 170 may transmit its GPS-determined geographical location to its serving air-cell BTS 115. The serving air-cell BTS 115 then interprets this location information and provides a corresponding preferred terrestrial cell frequency-scanning list to the airborne TETRA MS 170.

Note that an RSSI-based technique, often used in terrestrial systems, cannot be applied in the transfer of a non-terrestrial communication to/from a terrestrial communication scenario as described herein. This results from the RSSI changes in an airborne scenario being extremely slow, due to clear line-of-sight communications.

It is also within the contemplation of the invention that the serving air-cell BTS, or another component within the TETRA infrastructure, may map an airborne route for the aircraft. In this regard, based on a determined direction and speed that the aircraft is travelling, the air-cell BTS (or other infrastructure element) is better able to estimate the likely terrestrial cells, and therefore respective control frequencies, that should be included in the scanning list. In this manner, the air-cell BTS would need to receive far fewer delay update messages, in order to maintain a reasonably accurate terrestrial frequency-scanning list for the aircraft.

Advantageously, by adopting the aforementioned strategy for determining preferred cell re-selection during landing of the aircraft it is possible for the airborne TETRA MS to perform a seamless handover.

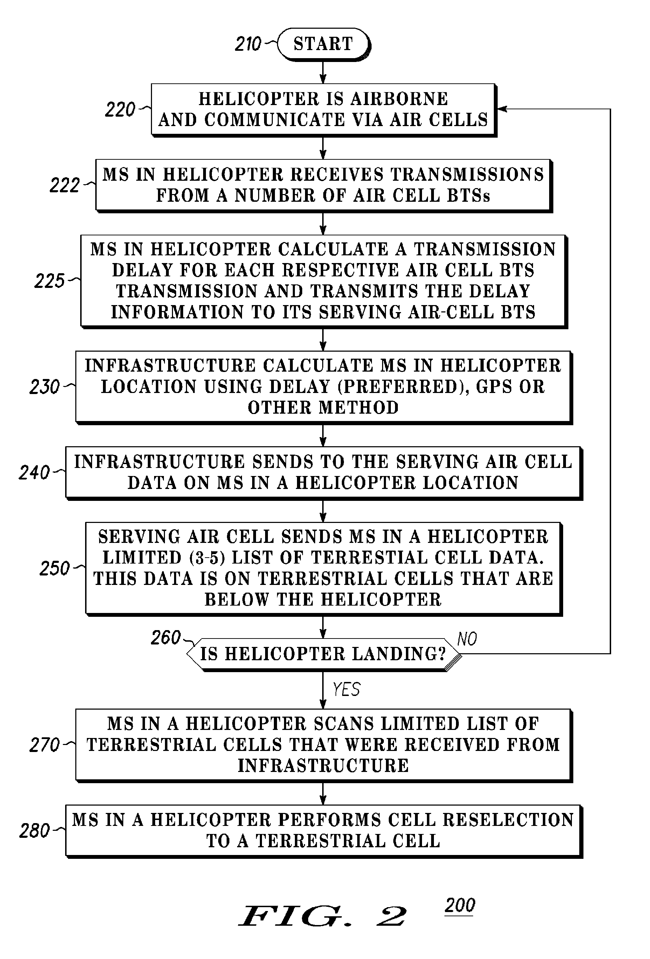

Referring now to FIG. 2, a flowchart 200 illustrates the preferred methodology for implementing the inventive concepts of the present invention. The process starts at step 210, with the aircraft (such as a helicopter), being airborne and communicating via the non-terrestrial (air cell) network, in step 220.

The helicopter's MS receives transmissions from a number of air-cell BTSs, in step 222. The MS then calculates a transmission delay for each (or a number of) respective air-cell BTS transmission and transmits the delay information to its serving air-cell BTS, as shown in step 225.

The TETRA infrastructure, for example, then determines a location of the aircraft, based on the delay information (or GPS information) transmitted from the airborne MS, as shown in step 230. The TETRA infrastructure then determines the preferred terrestrial cells that the airborne MS would want to handover to in a subsequent cell re-selection process, when moving from its current non-terrestrial cell/site to a terrestrial-based cell/site. The TETRA infrastructure then generates a preferred terrestrial cell frequency-scanning list, in step 240. This list is then sent to the airborne MS via the airborne MS's serving air-cell BTS, as shown in step 250.

This process repeats until the helicopter decides to land, as shown in steps 260 to 210 and again through to step 260. When the helicopter decides to land, the MS scans the terrestrial control frequencies according to the latest received terrestrial cell/control frequency list. In this manner, the MS determines the most appropriate cell to handover communication to, in step 270. The MS in the helicopter then performs the cell re-selection to the selected terrestrial cell, as shown in step 280.

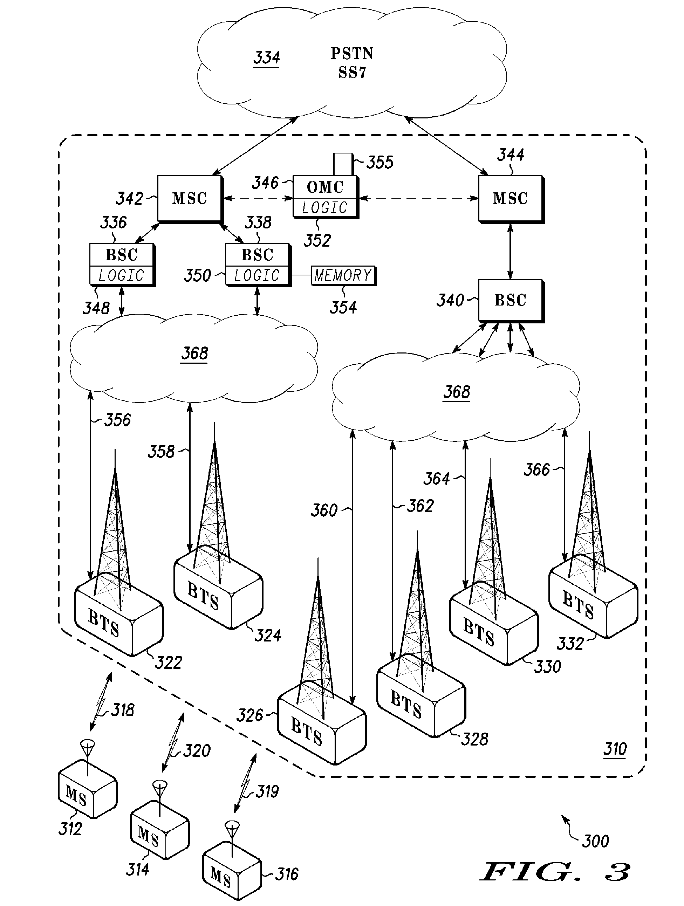

FIG. 3 shows, in outline, a trunked radio communications system 300 supporting a (now apparently incorrectly named) TErrestrial Trunked RAdio (TETRA) air-interface and adapted in accordance with a preferred embodiment of the invention. The European Telecommunications Standards Institute (ETSI) has defined the TETRA air interface. Generally, the air-interface protocol is administered from base transceiver sites that are geographically spaced apart - one base transceiver site supporting a cell or sectors of a cell. In accordance with the preferred embodiment of the present invention, the cells include a mixture of terrestrial and non-terrestrial cells.

A plurality of subscriber units, such as a mixture of MSs 312-316 and fixed terminals (not shown), communicate over a selected air-interface 318-320 with a plurality of base transceiver stations (BTS) 322-332. Let us assume that BTS 324 is serving a non-terrestrial (air) cell, and providing AGA communication to an airborne TETRA MS 314. The BTSs 322-332 may be connected to a conventional public-switched telephone network (PSTN) 334 through base station controllers (BSCs) 336-340 and mobile switching centres (MSCs) 342-344. Each BTS 322-332 is principally designed to serve its primary cell, with each BTS 322-332 containing one or more transceivers.

Each BSC 336-340 may control one or more BTSs 322-332, with BSCs 336-340 generally interconnected through MSCs 342-344. Each BSC 336-340 is therefore able to communicate with one another, if desired, to pass system administration information therebetween, with BSCs responsible for establishing and maintaining control channel and traffic channels to serviceable MSs affiliated therewith. The interconnection of BSCs therefore allows the trunked radio communication system to support handover of the MSs between cells. In this regard, for the combined terrestrial and non-terrestrial network of FIG. 3, handover may be performed between these two networks, for example, during take-off or landing of an airborne-capable MS 324.

Each MSC 342-344 provides a gateway to the PSTN 334, with MSCs interconnected through an operations and management centre (OMC) 346 that administers general control of the trunked radio system 300, as will be understood by those skilled in the art. The various system elements, such as BSCs 336-338 and OMC 346, include control logic 348-352, with the various system elements usually having associated memory element 354 (shown only in relation to BSC 338 for the sake of clarity).

The memory element 354 typically stores historically compiled operational data as well as in-call data, system information and control algorithms. For example, memory element 354 may be adapted to record aircraft location information to be used in an aircraft route-mapping scenario as described above.

In the context of the present invention, one or more air-cell BTS(s) 324 and/or one or more corresponding MSC(s) 342 have been adapted to implement the inventive concepts hereinbefore described. The one or more BTS(s) 324 receive location information, i.e. delay information, GPS information, etc. transmitted from an airborne MS 314. The one or more air-cell BTS(s) 324 forwards the information to a corresponding MSC 342. The MSC 342, in response to the location information, determines a projected terrestrial cell/control frequency-scanning list for the airborne MS 314. The MSC 342 sends this scanning list to the respective air-cell BTS 324, which transmits the list to the airborne MS 314.

A skilled artisan would appreciate that the aforementioned terrestrial cell/control frequency-scanning list may be generated from any suitable element within the infrastructure 300, for example BSC 336 or OMC 346. In this regard, the inventive concepts should not be viewed as being limited to the preferred adaptation of the MSC 342.

Although the inventive concepts find particular use in the scenario of an aircraft landing, i.e. transferring from a single non-terrestrial (air) cell to one of a number of terrestrial cells, it is envisaged that the inventive concepts hereinbefore described can be applied in the reverse case. If a large number of non-terrestrial cells were available, for example a large number of overlapping cells, each providing a different set of services or features, it is envisaged that the scanning list could include a sub-set of the available non-terrestrial cells/control frequencies for the airborne-capable MS 314 to select from when taking off.

Although the invention has been described in general with reference to the TETRA communication specification, utilising a TDMA access protocol, the inventive concepts contained herein are clearly suitable to alternative radio communication system technologies operating similar or alternative access protocols.

It will be understood that the communication system, communication unit and method of cell re-selection and handover, as described above, provides at least the following advantages:
(i) An airborne-capable MS, for example a TETRA MS, is able to perform seamless handover between terrestrial and non-terrestrial communication systems.
(ii) The seamless handover can be performed irrespective of the speed at which a MS is taking off or landing, due to the use of a focused, reduced scanning list.
(iii) By using delay information, calculated from transmissions of a number of air-cell BTS, the proposed solution complies with the current TETRA standard.
(iv) The invention is applicable for both landing and take-off scenarios of the airborne-capable MS.

Whilst the specific and preferred implementations of the embodiments of the present invention are described above, it is clear that one skilled in the art could readily apply variations and modifications of such inventive concepts.

Thus a wireless communication system, a communication unit and method of cell re-selection have been provided that address the cell re-selection problems between terrestrial and non-terrestrial communications systems, as previously described in relation to the prior art.

Methods are known for the location of a MS operating in a cellular communication system to be determined. Such methods include a so-called TDOA or time difference of arrival method and a GPS (global positioning system) based method. The TDOA method involves sending signals from a given MS to at least three BTSs the locations of which are known precisely or receiving in a MS signals from at least three BTSs. In the case where the signal from the MS is received by the three BTSs, using accurate time reference (GPS usually), and measurement of the transit delay for the signal to reach each BTS of the signal from the specific MS, the system can calculate the location of the MS. Such a procedure is described for example in GB2368240A. Alternatively, the MS may carry a GPS (Global Positioning System) receiver from which the MS may obtain information relating to its position, e.g. in the form of position co-ordinates.

## Claims

1. A wireless communication system (300) including a first cellular network operable to serve terrestrial based mobile stations and a second cellular network operable to serve non-terrestrial based mobile stations, each of the first and second networks including serving communication units defining cells and operable to serve mobile stations within the cells with a communications resource, and at least one mobile station (314) capable of communicating with serving communication units of the first network and serving communications of the second network, the system (300) including handover means operable to facilitate handover (280) of communications service of a given mobile station between the first network and the second network, the handover means being operable to produce location information relating to the location of the mobile station and to derive using the location information a resource scanning list (250) of selected cells to be scanned by the mobile station (314) for prospective service handover between the first and second networks.

2. A system according to claim 1 and wherein the wireless serving communication units comprise base transceiver stations.

3. A system according to claim 1 or claim 2 and wherein the said mobile station is operable to produce and transmit location information to a wireless serving communication unit of a serving network, and a processing unit of the serving network is operable to generate the scanning list using the location information and to transmit the same to the mobile station.

4. A system according to claim 2 or claim 3 and wherein the processor is included in the wireless serving communication unit.

5. A system according to claim 1 or claim 2 and wherein the said mobile station is operable to produce the location information and a processing unit of the mobile station is operable to generate the scanning list using the location information.

6. A system according to any one of the preceding claims and wherein the location information is produced when the mobile station is airborne, and said scanning list includes a subset of terrestrial serving wireless communication units of the first network suitable for the mobile station to handover to.

7. A system according to any one of the preceding claims and wherein the mobile station is operable to produce the location information by a time difference of arrival calculation method using the relative delays in transmissions received from a plurality of wireless serving communication units.

8. A wireless communication unit which is a mobile station adapted to operate in the wireless communication system according to any one of the preceding claims.

9. A wireless communication unit according to claim 8 and wherein the unit is operable to produce the location information by a time difference of arrival calculation method using the relative delays in transmissions received from a plurality of wireless serving communication units of the second cellular network.

10. A wireless communication unit according to claim 8 and wherein the unit includes a GPS (Global Positioning System) receiver and is operable to produce the location information using an output from the GPS receiver.

11. A wireless communication unit according to claim 8, claim 9 or claim 10 and which is also operable to use the scanning list to carry out a handover procedure of communication service from the second network to the first network by selecting from the list a serving wireless communication unit of the first network.

12. A wireless communication unit according to any one of claims 8 to 11 and wherein the scanning list comprises a list of channel frequencies of serving communications units of the first network.

13. A wireless communication unit according to claim 11 and wherein the unit is operable to carry out the handover procedure when the mobile station is carried on an aircraft which is landing or has landed on the ground from the air.

14. A wireless communication unit according to any one of claims 8 to 12 and which is operable to carry out a further handover procedure of communication service between different serving communications units of the first network using information relating to the strength and/or quality of signals received from different serving units.

15. A wireless communication unit according to claim 8 or claim 9 or any one of claims 11 to 14 and which comprises:
a receiver to receive transmissions from a plurality of air-cell wireless serving communication units;
and a location detector operable to carry out the determination of the location of the unit using location information derived thereby.

16. A wireless communication unit according to claim 15 and which further includes:
a signal processing function, operably coupled to said receiver, for determining a transmission delay and thereby a respective distance of the wireless communication unit from a respective plurality of air-cell wireless serving communication units; and
a transmitter, operably coupled to said signalling processor function, for transmitting said determined delays to an air-cell wireless serving communication unit for determining a scanning list of prospective terrestrial cells for the wireless communication unit to handover to.

17. A method of operation in a wireless communication system (300) including a first cellular network operable to serve terrestrial based mobile stations and a second cellular network operable to serve non-terrestrial based mobile stations, each of the first and second networks including serving communication units defining cells and operable to serve mobile stations within the cells with a communications resource, and at least one mobile station (314) capable of communicating with serving communication units of the first network and serving communications of the second units, the method including handing over (280) of communications service of a given mobile station between the first network and the second network by producing location information relating to the location of the mobile station and deriving using the location information a resource scanning list (250) of selected cells to be scanned by the mobile station (314) for prospective service handover between the first and second networks.
